# EUROPÄISCHE PATENTSCHRIFT

(11) **EP 2 048 014 B1**
(45) Veröffentlichungstag und Bekanntmachung des Hinweises auf die Patenterteilung: **17.08.2016**
(21) Anmeldenummer: 08016345.4
(22) Anmeldetag: 17.09.2008
(51) Int. Cl.: B60J 10/80

(54) **Profilanordnung und Verfahren zum Herstellen einer Profilanordnung**
Profile assembly and method for producing a profile assembly
Agencement de profilé et procédé de fabrication d'un agencement de profilé

(30) Priorität: 10.10.2007 DE 102007050352
(43) Veröffentlichungstag der Anmeldung: 15.04.2009
(73) Patentinhaber: Mayser GmbH & Co. KG, 89073 Ulm (DE)
(72) Erfinder: Scherraus, Marc, 89075 Ulm (DE); Schurr, Guido, 89185 Hüttisheim (DE)
(74) Vertreter: Patentanwälte Ruff, Wilhelm, Beier, Dauster & Partner mbB

(56) Entgegenhaltungen:
- EP-A1- 0 654 576
- DE-A1- 10 349 650
- DE-A1- 19 602 744
- DE-A1-102005 059 275
- DE-U1-202007 004 037
- US-A- 6 103 168
- US-A1- 2005 016 290

## Beschreibung

Die Erfindung betrifft eine Profilanordnung mit einem als Kunststoffspritzteil ausgeführten Trägerteil und einem zumindest abschnittsweise elastisch nachgiebigen Schaltleistenprofil, wobei das Schaltleistenprofil einen Halteabschnitt aufweist, der mit dem Trägerteil verbunden ist. Die Erfindung betrifft auch ein Verfahren zum Herstellen einer Profilanordnung mit einem als Kunststoffspritzteil ausgeführten Trägerteil und einem zumindest abschnittsweise elastisch nachgiebigen Schaltleistenprofil.

Aus der deutschen Offenlegungsschrift DE 10 2005 059 275 A1 ist es bekannt, ein elastisches Dichtelement mit einem Befestigungselement dadurch zu verbinden, dass an das Dichtelement und das Befestigungselement ein Profil angespritzt wird. Weder das Profil noch das Dichtelement sind mit elektrischen Leitern versehen.

Aus der europäischen Offenlegungsschrift EP 0 654 576 A1 ist ein Schaltleistenprofil bekannt, wobei in das Schaltleistenprofil eingebettete elektrische Leiter mittels Nadelkontaktstiften kontaktiert werden.

Aus der US-Offenlegungsschrift US 2005/0016290 A1 ist ein kapazitiv wirkendes Schaltleistenprofil bekannt.

Aus der deutschen Offenlegungsschrift DE 103 49 650 A1 ist eine Profilanordnung bekannt, bei der ein elastisch nachgiebiges Schaltprofil einen Halteabschnitt aufweist, der in eine Nut in ein Trägerteil eingezogen wird. Das Schaltprofil mit dem Halteteil ist extrudiert, das Trägerteil dahingegen als Spritzgussteil ausgeführt. Die Nut weist im Bereich ihrer Öffnung einander abwechselnde Vorsprünge und Ausnehmungen auf, wobei die Vorsprünge einen Hinterschnitt ausbilden, hinter den der Halteabschnitt des Schaltprofils eingreift.

Aus der US-Patentschrift US 6,103,168 A ist es bekannt, Verkleidungsschichten an ein Trägerteil anzuspritzen. Die Verkleidungsschichten sind nicht mit elektrischen Leitern versehen.

Aus der deutschen Gebrauchsmusterschrift DE 20 2007 004 037 U1 ist ein Schaltleistenprofil bekannt, das an einem Verkleidungselement eines Kraftfahrzeugs angeordnet sein kann. Das Schaltleistenprofil kann als kapazitiv arbeitender Sensor ausgebildet sein.

Aus der deutschen Offenlegungsschrift DE 196 02 744 A1 ist ein Schaltleistenprofil bekannt, das einen gemeinsam mit dem Schaltleistenprofil extrudierten Halteabschnitt aufweist. Mit diesem Halteabschnitt ist das Schaltleistenprofil an ein Trägerteil angeklebt, bspw. mittels eines doppelseitigen Klebebands.

Es ist damit bekannt, Schaltleistenprofile mit ihrem Halteabschnitt auf Trägerteile aufzukleben, beispielsweise dadurch, dass der Halteabschnitt mit einer Klebeschicht versehen wird. Um den sicheren Halt des Schaltleistenprofils auf dem Trägerteil zu gewährleisten, sind vergleichsweise zeitaufwändige Materialvorbereitungen erforderlich, beispielsweise Entfetten des Trägerteils.

Mit der Erfindung soll eine mit geringem Zeitaufwand und prozesssicher herstellbare Profilanordnung sowie ein entsprechendes Verfahren zum Herstellen einer Profilanordnung bereitgestellt werden.

Erfindungsgemäß ist hierzu eine Profilanordnung mit den Merkmalen von Anspruch 1 vorgeshen. Erfindungsgemäß ist eine Profilanordnung mit einem als Kunststoffspritzteil ausgeführten Trägerteil und einem zumindest abschnittsweise elastisch nachgiebigen Schaltleistenprofil vorgesehen, wobei das Schaltleistenprofil einen Halteabschnitt aufweist, der mit dem Trägerteil verbunden ist, bei der der Halteabschnitt des Schaltleistenprofils durch Anspritzen eines Trägerteilabschnitts wenigstens abschnittsweise stoffschlüssig mit dem Trägerteil verbunden ist.

Indem der Halteabschnitt des Schaltleistenprofils durch Anspritzen mit dem Trägerteil verbunden wird, entsteht eine sichere Befestigung, wobei sich die stoffschlüssige Verbindung zwischen Trägerteil und Halteabschnitt des Schaltleistenprofils während des Spritzvorganges des Trägerteils ausbildet. Das Verbinden von Schaltleistenprofil und Trägerteil erfolgt dadurch in einem Fertigungsschritt, der ohnehin zum Herstellen des Trägerteils erforderlich ist. Dies erleichtert die Herstellung, da am Trägerteil selbst keine vorbereitenden Arbeiten, beispielsweise Entfetten oder dergleichen, wie beim Aufkleben des Schaltleistenprofils, erforderlich sind. Darüber hinaus können sehr enge Fertigungstoleranzen erreicht werden, da das Schaltleistenprofil immer in ein und derselben Lage relativ zum Trägerteil angeordnet ist und speziell keine Positionierungsfehler beim Auflegen des Schaltleistenprofils auf das Trägerteil entstehen können.

In Weiterbildung der Erfindung weist der Trägerteilabschnitt wenigstens eine Rippe auf und der Halteabschnitt des Schaltleistenprofils ist stoffschlüssig mit einer Schmalseite der Rippe verbunden.

Rippen am Trägerteilabschnitt sorgen einerseits für eine Stabilisierung des Trägerteils. Indem der Halteabschnitt des Schaltleistenprofils andererseits mit einer Schmalseite der Rippe verbunden ist, kann erreicht werden, dass während des Spritzvorgangs weniger Druck auf das Schaltleistenprofil ausgeübt wird als dies bei vollflächigem Kontaktieren des Halteabschnitts des Schaltleistenprofils der Fall wäre. Auf diese Weise kann sichergestellt werden, dass sich das Schaltleistenprofil beim Anspritzen des Trägerteilabschnitts nur geringfügig verformt und auch im Endzustand einen für die Erfüllung der Schaltleistenfunktion optimalen Querschnitt aufweist.

In Weiterbildung der Erfindung weist das Trägerteil mehrere Rippen auf, die mit ihrem jeweiligen Endabschnitt frei von einem Basisabschnitt des Trägerteils abragen, wobei der Halteabschnitt des Schaltleistenprofils auf den Endabschnitten der Rippen aufliegt und mit diesen stoffschlüssig verbunden ist.

Auf diese Weise kann eine sehr steife Anbindung von Trägerteil und Schaltleistenprofil erfolgen, da die Rippen auch bei geringer Materialstärke Biegekräften, die senkrecht zu ihren Schmalseiten wirken, gut widerstehen können. Darüber hinaus wirkt der auf das Halteteil des Schaltleistenprofils ausgeübte Druck, der beim Spritzen des Trägerteils wirkt, nur in sehr kleinen Flächenbereichen des Halteabschnitts des Schaltleistenprofils, da dieser lediglich auf den Endabschnitten der Rippen und somit auf einer freien Schmalseite jeder Rippe aufliegt. Auf diese Weise können Verformungen des Schaltleistenprofils durch den Druck beim Spritzen weitgehend vermieden werden.

Alternativ kann der Halteabschnitt eine sich von dem Schaltleistenprofil weg erstreckende Leiste oder Rippe aufweisen, die nach dem Anspritzen des Trägerteils beidseitig vom Kunststoffmaterial des Trägerteils umgeben ist. Durch eine solche Gestaltung lässt sich erreichen, dass der Spritzdruck beim Spritzen des Trägerteils ausschließlich auf die Leiste oder Rippe des Halteabschnitts des Schaltleistenprofils wirkt, da diese von zwei gegenüberliegenden Seiten her angespritzt wird. Der elastisch nachgiebige Abschnitt des Schaltleistenprofils, der die eigentliche Schaltfunktion übernimmt, kann dahingegen so auf dem nicht beaufschlagten Teil des Halteabschnitts angeordnet sein, dass dieser beim Spritzen des Trägerteils überhaupt nicht dem Spritzdruck ausgesetzt wird und sich infolgedessen auch nicht dauerhaft verformen kann.

In Weiterbildung der Erfindung ist der Halteabschnitt des Schaltleistenprofils mit Vorsprüngen, Rippen und/oder Stufen versehen.

Auf diese Weise kann eine Kontaktfläche zwischen Trägerteil und Halteabschnitt des Schaltleistenprofils vergrößert werden. Dadurch kann die stoffschlüssige Verbindung verbessert werden.

In Weiterbildung der Erfindung ist der Halteabschnitt des Schaltleistenprofils mit wenigstens einem Hinterschnitt versehen und im Bereich des Hinterschnitts mit dem Trägerteil formschlüssig verbunden.

Wenn zusätzlich zum Stoffschluss ein Formschluss zwischen Trägerteil und Halteabschnitt des Schaltleistenprofils hergestellt wird, kann die Verbindung zwischen Schaltleistenprofil und Trägerteil noch weitaus sicherer gestaltet werden. Beispielsweise weist der Halteabschnitt eine im Querschnitt schwalbenschwanzartig geformte, vorspringende Leiste auf, die beim Anspritzen des Trägerteils vom Kunststoffmaterial des Trägerteils umgeben wird. Dadurch entsteht neben dem Stoffschluss ein Formschluss. Alternativ oder zusätzlich können am Halteabschnitt schwalbenschwanzförmige Nuten vorgesehen sein, die vom Kunststoffmaterial des Trägerteils ausgefüllt werden.

In Weiterbildung der Erfindung ist das Trägerteil als längliche Leiste ausgebildet und mit Befestigungsmitteln zur Befestigung an einer Fahrzeugkarosserie versehen.

Auf diese Weise kann ein Schaltleistenprofil zusammen mit dem Trägerteil als unmittelbar am Kraftfahrzeug montierbares Element hergestellt werden und zur Befestigung des Trägerteils können beispielsweise Spreiznieten oder dergleichen vorgesehen sein.

In Weiterbildung der Erfindung verläuft das Schaltleistenprofil entlang seiner Längsrichtung und/oder entlang seiner Querrichtung gekrümmt.

Auf diese Weise lässt sich das Schaltleistenprofil an Krümmungen von Tür- oder Klappenöffnungen am Kraftfahrzeug anpassen. Wesentlich ist dabei, dass das Schaltleistenprofil während des Anspritzens des Trägerteils in seiner gekrümmten Lage fixiert wird. Auch bei räumlich gekrümmten Verläufen eines Schaltleistenprofils kann dadurch sichergestellt werden, dass das Schaltleistenprofil immer in der vorgegebenen Position mit dem Trägerteil verbunden ist. Hergestellt können dadurch mit geringem Aufwand äußerst passgenaue Teile.

In Weiterbildung der Erfindung besteht das Halteteil des Schaltleistenprofils wenigstens abschnittsweise aus elektrisch leitfähigem Material.

Auf diese Weise kann das Halteteil des Schaltleistenprofils als Schirmelektrode bei kapazitiver Erfassung von Hindernissen verwendet werden.

In Weiterbildung der Erfindung besteht das Trägerteil wenigstens abschnittsweise aus elektrisch leitfähigem Material.

Alternativ oder zusätzlich zum Halteteil kann auf diese Weise auch das Trägerteil zur Abschirmung eines elektrischen Feldes benutzt werden, das zur kapazitiven Erfassung von Hindernissen im Betrieb von dem Schaltleistenprofil ausgeht. Da das Trägerteil zur Montage an einer Kraftfahrzeugkarosserie vorgesehen ist, muss ein elektrisches Feld zur Erfassung von Hindernissen sich von der Karosserie weg erstrecken. Bei Blechkarosserien ist dies in der Regel unproblematisch, werden aber beispielsweise Kunststofftüren oder Kunststoffklappen verwendet, erleichtert ein Trägerteil aus elektrisch leitfähigem Material die Abschirmung eines solchen elektrischen Feldes erheblich.

In Weiterbildung der Erfindung weist das Schaltleistenprofil wenigstens zwei parallel zur Längsrichtung des Schaltleistenprofils verlaufende und voneinander beabstandete Leiter auf, wobei ein erster Leiter als Kondensatorelektrode zur Erzeugung eines elektrischen Feldes und ein zweiter Leiter als Schildelektrode zur Beeinflussung des elektrischen Feldes ausgebildet ist. Der erste und der zweite Leiter oder auch weitere Leiter des Schaltleistenprofils können vorteilhafterweise beim Verformen des Schaltleistenprofils in elektrischen Kontakt miteinander kommen. Zusätzlich zur berührungslosen, kapazitiven Erfassung von Hindernissen kann dadurch noch eine taktile Erfassung bereitgestellt werden. Auf einer, dem zweiten Leiter im Wesentlichen gegenüberliegenden Seite des ersten Leiters kann beabstandet vom ersten Leiter wenigstens ein dritter Leiter innerhalb des Schaltleistenprofils vorgesehen sein. Ein solcher dritter Leiter kann zu Diagnosezwecken oder auch zur Beeinflussung des vom ersten Leiter ausgehenden elektrischen Feldes vorgesehen sein. Im Falle eines für Diagnosezwecke vorgesehenen dritten Leiters kann mittels des dritten Leiters beispielsweise festgestellt werden, ob überhaupt ein elektrisches Feld vom ersten Leiter ausgeht und der kapazitive Sensor demnach funktionsfähig ist. Im Falle der Beeinflussung des elektrischen Feldes kann der dritte Leiter beispielsweise auf Massepotential gelegt werden, um das vom ersten Leiter ausgehende elektrische Feld zu beeinflussen. Schließlich kann der dritte Leiter auch auf das gleiche Potential wie der erste Leiter gelegt werden, um die Sensorfläche zu vergrößern. Selbstverständlich ist es möglich, die vorstehend erörterten Funktionen des dritten Leiters miteinander zu kombinieren, indem Schaltmittel vorgesehen sind, um den dritten Leiter für unterschiedliche Funktionen zu verwenden. In Längsrichtung des Schaltleistenprofils gesehen können unterschiedliche Funktionen des dritten Leiters auch räumlich gesehen verwirklicht werden, um räumlichen Gegebenheiten im Öffnungsbereich einer Fahrzeugtür oder Fahrzeugklappe gerecht zu werden.

Das der Erfindung zugrunde liegende Problem wird auch durch ein Verfahren mit den Merkmalen von Anspruch 14 gelöst. Erfindungsgemäß ist ein Verfahren zum Herstellen einer Profilanordnung mit einem als Kunststoffspritzteil ausgeführten Trägerteil und einem zumindest abschnittsweise elastisch nachgiebigen Schaltleistenprofil bereitgestellt, bei dem folgende Schritte vorgesehen sind:
- Einlegen des Schaltleistenprofils in eine Kunststoffspritzgussform, so dass ein Halteabschnitt des Schaltleistenprofils von einer Kavität der Kunststoffspritzgussform her wenigstens abschnittsweise zugänglich ist,
- Spritzen des Trägerteils, wobei der zum Spritzen des Trägerteils verwendete Kunststoff im fließfähigen Zustand den Halteabschnitt des Schaltleistenprofils wenigstens abschnittsweise berührt und
- Entnehmen des Trägerteils mit dem angespritzten Schaltleistenprofil.

Durch das erfindungsgemäß Verfahren wird das Schaltleistenprofil stets in der exakt vorgegebenen Position auf dem Trägerteil fixiert. Dies geschieht durch einfaches Einlegen des Schaltleistenprofils in eine Kunststoffspritzgussform und anschließendes Spritzen des Trägerteils. Nach dem Entnehmen des Trägerteils mit dem angespritzten Schaltleistenprofil erhält man ein im Wesentlichen einbaufertiges Bauteil.

In Weiterbildung der Erfindung wird das Schaltleistenprofil in eine passende Nut einer Kunststoffspritzgussform eingelegt und ein Unterdruck wird an die Nut angelegt, um das Schaltleistenprofil anzusaugen.

Auf diese Weise kann das Schaltleistenprofil in der Kunststoffspritzgussform fixiert werden. Dies ist insbesondere dann von Bedeutung, wenn das Schaltleistenprofil in der Kunststoffspritzgussform eine gekrümmte, gegebenenfalls sogar räumlich gekrümmte Form einnehmen soll. Schaltleistenprofile werden extrudiert und weisen demzufolge zunächst einmal eine geradlinige Form auf. Wenn Schaltleistenprofile daher in eine gekrümmte Form gebracht werden, so treten zwangsläufig gewisse Rückfederungskräfte auf. Das Anlegen eines Unterdrucks an eine Nut in der Kunststoffspritzgussform kann ein Rückfedern des Schaltleistenprofils zuverlässig verhindern. Nach dem Spritzen des Trägerteils ist das Schaltleistenprofil dann stoffschlüssig mit dem Trägerteil verbunden und wird dadurch zuverlässig in der vordefinierten Form gehalten.

In Weiterbildung der Erfindung können Drahtlitzen des Schaltleistenprofils vor dem Einlegen in die Kunststoffspritzgussform elektrisch kontaktiert werden. Gleichzeitig mit dem Einspritzen des Kunststoffs für das Trägerteil kann dann durch diesen Kunststoff eine Abdichtung der beiden Enden des Schaltleistenprofils erfolgen. Dadurch kann ein weiterer Arbeitsschritt eingespart werden, da ansonsten eine Kontaktierung der Drahtlitzen nach dem Anspritzen des Trägerteils erfolgt und nach dem Kontaktieren noch die beiden offenen Enden des Schaltleistenprofils abgedichtet werden müssen.

Weitere Merkmale und Vorteile der Erfindung ergeben sich aus den Ansprüchen und der folgenden Beschreibung bevorzugter Ausführungsformen der Erfindung. Einzelmerkmale der unterschiedlichen Ausführungsformen lassen sich dabei in beliebiger Weise miteinander kombinieren, ohne den Rahmen der Erfindung zu überschreiten. In den Zeichnungen zeigen:
- Fig. 1: eine Schnittansicht einer erfindungsgemäßen Profilanordnung gemäß einer ersten Ausführungsform,
- Fig. 2: eine abschnittsweise Schnittansicht einer Spritzgussform zum Herstellen der erfindungsgemäßen Profilanordnung der Fig. 1,
- Fig. 3: eine schematische Schnittansicht eines Schaltleistenprofils gemäß einer zweiten Ausführungsform der Erfindung,
- Fig. 4: eine schematische Schnittansicht eines Schaltleistenprofils gemäß einer dritten Ausführungsform der Erfindung,
- Fig. 5: eine schematische Schnittansicht eines Schaltleistenprofils gemäß einer vierten Ausführungsform der Erfindung,
- Fig. 6: eine abschnittsweise Schnittansicht eines Kraftfahrzeugs im Bereich einer Heckklappe mit einer erfindungsgemäßen Profilanordnung gemäß einer fünften Ausführungsform der Erfindung,
- Fig. 7: eine perspektivische Ansicht von oben einer erfindungsgemäßen Profilanordnung gemäß einer sechsten Ausführungsform der Erfindung,
- Fig. 8: die Profilanordnung der Fig. 7 von schräg unten,
- Fig. 9: die Profilanordnung der Fig. 7 in einer Ansicht von vorne,
- Fig. 10: die Profilanordnung der Fig. 9 in einer Ansicht von oben,
- Fig. 11: die Profilanordnung der Fig. 9 von unten,
- Fig. 12: eine Seitenansicht der Profilanordnung der Fig. 9,
- Fig. 13: eine Ansicht auf die Schnittebene A-A der Fig. 12,
- Fig. 14: eine Ansicht auf die Schnittebene B-B der Fig. 12,
- Fig. 15: eine Draufsicht auf die Oberseite eines Spritzgusswerkzeugs zum Herstellen der erfindungsgemäßen Profilanordnung gemäß Fig. 7,
- Fig. 16: eine Ansicht auf die Schnittebene A-A der Fig. 15,
- Fig. 17: eine Draufsicht auf das Unterteil einer Spritzgussform zum Herstellen der erfindungsgemäßen Profilanordnung der Fig. 7,
- Fig. 18: eine Ansicht auf die Schnittebene B-B der Fig. 17,
- Fig. 19: eine perspektivische Ansicht eines Schaltleistenprofils vor dem Einlegen in eine Spritzgussform,
- Fig. 20: das Oberteil der Spritzgussform aus Fig. 15 vor dem Einlegen des Schaltleistenprofils gemäß Fig. 19 und
- Fig. 21: das Oberteil der Spritzgussform gemäß Fig. 20 mit der darin angeordneten, fertig gestellten Profilanordnung.

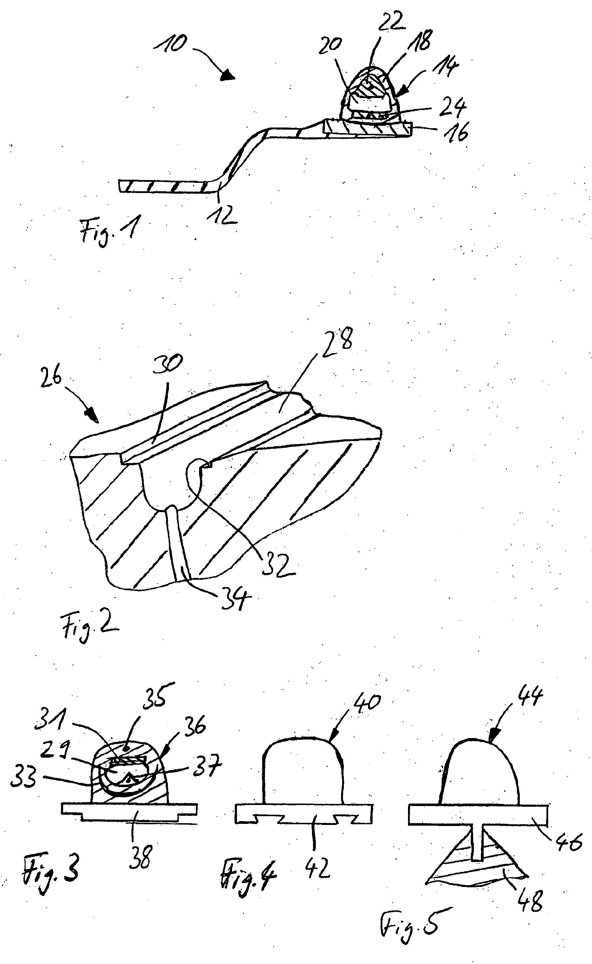

Die Darstellung der Fig. 1 zeigt eine erfindungsgemäße Profilanordnung 10 gemäß einer ersten Ausführungsform mit einem Trägerteil 12 und einem Schaltleistenprofil 14. Das Schaltleistenprofil 14 weist einen Halteabschnitt 16 auf, der in Form einer Leiste mit annähernd rechteckförmigen Querschnitt realisiert ist. Auf dem Halteabschnitt 16 ist das eigentliche Schaltprofil 18 angeordnet, das aus elastisch nachgiebigem Kunststoff besteht und eine schlauchartige Form aufweist. Das Schaltprofil 18 weist einen Hohlraum 20 auf, an den an jeweils gegenüberliegenden Seiten ein erster Leiter 22 und ein zweiter Leiter 24 angrenzen. Die Leiter 22 und 24 bestehen jeweils aus einem leitfähigen Kunststoff, wobei etwa in der Mitte des jeweiligen Leiters 22, 24 jeweils eine Drahtlitze eingelegt ist. Wird die Schaltleiste 18 komprimiert, beispielsweise dann, wenn die Schaltleiste 18 gegen eine menschliche Hand gedrückt wird, kommen die Leiter 22, 24 in elektrischen Kontakt miteinander, wodurch ein Schaltsignal erzeugt werden kann, das wiederum zur Reversierung eines Antriebsmotors verwendet wird, beispielsweise um eine Schiebetüre, an deren Vorderkante die Profilanordnung 10 befestigt ist, wieder zu öffnen. Das Schaltleistenprofil 14 wird durch Extrusion hergestellt.

Das Schaltleistenprofil 14 ist als sogenannte taktile Schaltleiste ausgebildet und kann Hindernisse dann erfassen, wenn diese in Kontakt mit der Schaltleiste 18 kommen. Alternativ oder zusätzlich kann die Schaltleiste 18 auch als berührungsloser Sensor ausgebildet sein, bei dem mittels eines elektrischen Feldes Hindernisse kapazitiv und berührungslos erfasst werden. In diesem Fall geht vom ersten Leiter 22 ein elektrisches Feld aus und der zweite Leiter 24 wird auf Masse gelegt, um das elektrische Feld in Erfassungsrichtung auszurichten. Die Veränderung des elektrischen Feldes durch ein Hindernis kann dann mittels einer geeigneten Auswerteelektronik detektiert werden.

Der Halteabschnitt 16 grenzt mit seiner in der Darstellung der Fig. 1 linken Schmalseite und mit seiner Unterseite an das Trägerteil 12 an. Im Kontaktbereich mit dem Trägerteil 12 sind der Halteabschnitt 16 und das Trägerteil 12 stoffschlüssig miteinander verbunden. Diese stoffschlüssige Verbindung kommt dadurch zustande, dass das Schaltleistenprofil 14 in eine Spritzgussform eingelegt wird und anschließend das Trägerteil 12 in dieser Spritzgussform gespritzt wird. Der in die Spritzgussform eingeleitete fließfähige Kunststoff verbindet sich im Bereich der Kontaktfläche stoffschlüssig mit dem Material des Halteabschnitts 16. Bei der Materialauswahl für Trägerteil 12 und Halteabschnitt 16 ist daher darauf zu achten, dass sich die jeweils ausgewählten Materialien beim Spritzvorgang miteinander verbinden. Beispielsweise können das Material für das Trägerteil 12 und das Material für den Halteabschnitt 16 aus der Gruppe der Polyolefine ausgewählt werden.

Die Darstellung der Fig. 2 zeigt einen Abschnitt einer Spritzgussform, wie sie zum Herstellen der erfindungsgemäßen Profilanordnung 10 verwendet werden kann. Die Spritzgussform 26 weist eine Nut 28 auf, in die das Schaltleistenprofil 14 eingelegt werden kann. Wie zu erkennen ist, wird das Schaltleistenprofil 14 mit dem Halteabschnitt 16 nach oben in die Nut 28 eingeführt, bis der Halteabschnitt 16 passgenau in Ausnehmungen 30, 32 liegt, die seitlich an die Nut 28 angrenzen. Nach dem Einlegen des Schaltleistenprofils 14 in die Nut 28 wird an eine Bohrung 34, die mit dem Nutgrund der Nut 28 verbunden ist, ein Unterdruck angelegt. Dadurch wird das Schaltleistenprofil 14 zuverlässig in der Nut 28 gehalten. Über die Länge der Nut 28 gesehen können mehrere Bohrungen 34 vorgesehen sein. Nach dem Schließen der Spritzgussform 26 wird dann Kunststoff eingespritzt und somit das Trägerteil 12 an den Halteabschnitt 16 des Schaltleistenprofils 14 angespritzt. Das Anspritzen erfolgt bei der dargestellten Ausführungsform in der Weise, dass der Halteabschnitt 16 vollflächig mit dem Kunststoffmaterial des Trägerteils 12 unterspritzt wird und an seiner in Fig. 1 linken Seitenkante ebenfalls noch abschnittsweise unterspritzt wird. Nach dem Verfestigen des Kunststoffs für das Trägerteil 12 kann dann die gesamte Profilanordnung 10 aus der Spritzgussform 26 entnommen werden.

Die Darstellung der Fig. 3 zeigt schematisch ein Schaltleistenprofil 36 gemäß einer zweiten Ausführungsform der Erfindung. Ein Halteabschnitt 38 ist hier im Bereich seiner rechten und linken Seitenkante mit jeweils einem Absatz versehen. Dadurch kann eine Kontaktfläche mit dem Kunststoffmaterial des Trägerteils vergrößert werden und die stoffschlüssige Verbindung kann verbessert werden. Das Schaltleistenprofil 36 wird zusammen mit dem Halteabschnitt 38 extrudiert, so dass die Absätze an der rechten und linken Seite des Halteabschnitts 38 in Längsrichtung gesehen durchlaufen.

Das Schaltleistenprofil 36 ist sowohl für eine kapazitive, berührungslose Erfassung von Hindernissen als auch für eine taktile Erfassung von Hindernissen ausgelegt. Das Schaltleistenprofil 36 weist im Bereich seiner aus nachgiebigem Kunststoff bestehenden Schaltleiste einen Hohlraum 29 sowie angrenzend an den Hohlraum 29 einen ersten Leiter 31 mit rechteckförmigem Querschnitt auf. Weiterhin ist außerhalb des Hohlraums 29 im Kunststoff der Schaltleiste ein im Querschnitt U-förmiger zweiter Leiter 33 vorgesehen. Auf der, dem zweiten Leiter 33 gegenüberliegenden Seite des ersten Leiters 31 ist ein dritter Leiter 35 angeordnet, der lediglich aus einer Drahtlitze besteht. Schließlich ist angrenzend an den Hohlraum 29 auf der, dem ersten Leiter 31 gegenüberliegenden Seite des Hohlraums 29 ein vierter Leiter 37 angeordnet. Sämtliche Leiter des Schaltleistenprofils 36 sind in der Darstellung der Fig. 3 lediglich schematisch dargestellt. Mit Ausnahme des dritten Leiters 35 bestehen alle Leiter 31, 33 und 37 jeweils aus einem Bereich leitfähigen Polymers, in dessen Mitte eine Drahtlitze liegt. Die Drahtlitzen können während des Extrudierens eingebaut werden.

Für eine kapazitive Erfassung von Hindernissen wird der erste Leiter 31 als Kondensatorelektrode verwendet, von der ein elektrisches Feld ausgeht. Zur Rückseite des ersten Leiters 31 hin wird dieses elektrische Feld durch den U-förmigen zweiten Leiter 33 abgeschirmt, der auf Masse gelegt ist. Gerät ein Hindernis in das vom ersten Leiter 31 ausgehende elektrische Feld, so kann dies durch eine geeignete Auswerteelektronik detektiert werden und ein Schaltsignal kann erzeugt werden. Um die Abschirmung des vom ersten Leiter ausgehenden elektrischen Feldes zu verbessern, kann auch der Halteabschnitt 38 aus leitfähigem Kunststoffmaterial bestehen und auf Masse gelegt sein.

Der dritte Leiter 35 kann zu verschiedenen Zwecken eingesetzt werden. Zunächst kann er als Prüfelektrode verwendet werden, um festzustellen, ob von dem ersten Leiter 31 ein elektrisches Feld ausgeht und der kapazitive Sensor somit betriebsbereit ist. Alternativ kann der dritte Leiter 35 auf das gleiche elektrische Potenzial wie der erste Leiter 31 gelegt werden und dadurch zur Vergrößerung der Sensoroberfläche beitragen. Schließlich kann der dritte Leiter 35 auf Masse gelegt werden, um gegebenenfalls das vom ersten Leiter 31 ausgehend elektrische Feld zu beeinflussen.

Für den Betrieb als taktile Schaltleiste, der gleichzeitig zum kapazitiven Betrieb erfolgen kann, wird ein Widerstand zwischen dem ersten Leiter 31 und dem vierten Leiter 37 erfasst. Wird die Schaltleiste des Schaltleistenprofils 36 durch ein Hindernis zusammengedrückt, so gelangt der erste Leiter 31 in Kontakt mit dem vierten Leiter 37. Dadurch entsteht zwischen diesen beiden Leitern 31, 37 ein Kurzschluss, der detektiert und zum Erzeugen eines Schaltsignals verwendet werden kann.

Die Darstellung der Fig. 4 zeigt schematisch ein weiteres Schaltleistenprofil 40. Ein Halteabschnitt 42 dieses Schaltleistenprofils 40 ist an seiner Unterseite mit zwei Nuten versehen, die im Querschnitt eine Schwalbenschwanzform aufweisen. Beim Anspritzen des Trägerteils dringt flüssiger Kunststoff in diese Nuten ein und nach dem Verfestigen des Kunststoffs ist dann zusätzlich zu der Stoffschlussverbindung zwischen Halteabschnitt 42 und Trägerteil noch eine Formschlussverbi ausgebildet. Zur Ausbildung eines Formschlusses können selbstverständlich neben schwalbenschwanzförmigen Nuten auch schwalbenschwanzförmige Vorsprünge oder Leisten an einem Halteabschnitt ausgebildet werden.

Die Darstellung der Fig. 5 zeigt schematisch ein Schaltleistenprofil 44 gemäß einer vierten Ausführungsform der Erfindung. Ein Halteabschnitt 46 des Schaltleistenprofils 44 ist mittig mit einer von seiner Unterseite abragenden Rippe versehen. Beim Anspritzen eines Trägerteils 48 kontaktiert der Kunststoff lediglich diese Rippe, nicht aber die übrigen Abschnitte des Halteabschnitts 46. Das Trägerteil 48 weist hierzu eine im Querschnitt dreieckförmige Konfiguration auf, in dessen Spitze die Rippe eingebettet ist. Auf diese Weise wirkt der beim Spritzen des Trägerteils 48 ausgeübte Druck zweiseitig auf die Rippe des Halteabschnitts 46. Der auf die Rippe ausgeübte Druck hebt sich durch die gewählte Konfiguration aber auf und kann insbesondere nicht zu einer Verformung des Halteabschnitts 46 in Bereichen außerhalb der Rippe führen. Speziell kann die eigentliche Schaltleiste des Schaltleistenprofils 44 während eines Spritzvorgangs dadurch nicht bleibend verformt werden.

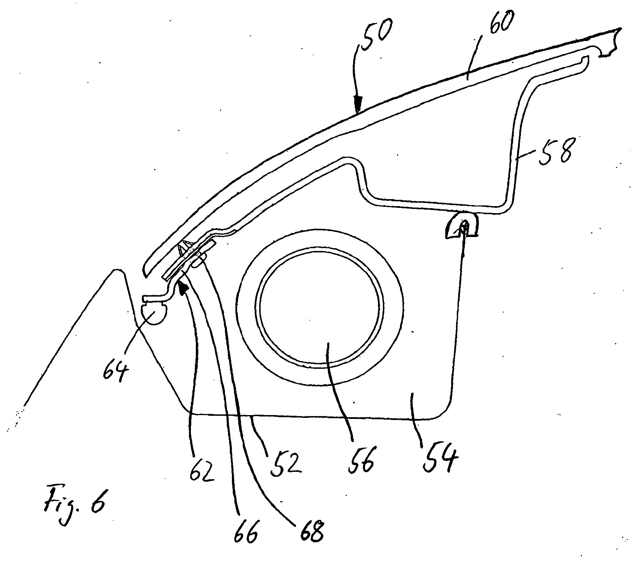

Die Darstellung der Fig. 6 zeigt eine abschnittsweise Schnittansicht eines Kraftfahrzeugs im Bereich seiner Heckklappe 50. Eine Karosserie 52 des Kraftfahrzeugs bildet im Randbereich der Heckklappe 50 eine Wasserrinne 54 aus, in der ein elektrischer Spindelantrieb 56 zum Öffnen und Schließen der Heckklappe 50 angeordnet ist. Die Heckklappe 50 selbst weist eine Blechstruktur 58 auf, auf der wiederum eine Heckscheibe 60 angeordnet ist. Im Bereich zwischen der Karosserie 52 und der Heckklappe 50 besteht während des Schließens der Heckklappe 50 die Gefahr, dass Personen oder Gegenstände eingeklemmt werden. Eine Seitenkante der Heckklappe 50 ist daher mit einer erfindungsgemäßen Profilanordnung 62 versehen. Die erfindungsgemäße Profilanordnung 62 besteht aus einem Schaltleistenprofil 64, das mit einem Trägerteil 66 verbunden ist, das wiederum mittels Kunststoffspreiznieten 68 mit der Blechstruktur 58 der Heckklappe 50 verbunden ist. Das Schaltleistenprofil 64 stellt im geöffneten Zustand der Heckklappe 50 denjenigen Teil der Berandung der Heckklappe 50 dar, den ein Hindernis zuerst kontaktieren muss, wenn die Heckklappe 50 schließt. Beim Kontakt mit dem Schaltleistenprofil 64 kann dann ein Schaltsignal erzeugt werden, das den elektrischen Spindelantrieb 56 reversiert und die Heckklappe 50 wieder öffnet. Alternativ oder zusätzlich kann das Schaltleistenprofil 64 für die berührungslose kapazitive Erfassung von Hindernissen ausgelegt sein. Wird ein Hindernis im Spalt zwischen Heckklappe 50 und Karosserie 52 detektiert, kann dann der elektrische Spindelantrieb 56 angehalten oder reversiert werden.

Das Schaltleistenprofil 64 ist dabei auf einem im Querschnitt etwa L-artig ausgebildeten und von der Blechstruktur 58 abragenden Abschnitt des Trägerteils 66 befestigt. Beim Kontakt mit einem Hindernis kann sich dieser L-artige Abschnitt des Trägerteils 66 zusätzlich verformen, um ein gewisses Nachgeben beim Kontakt mit einem Hindernis zu gewährleisten.

Bei kapazitiver Erfassung von Hindernissen geht vom Schaltleistenprofil 64 ein elektrisches Feld aus, das durch Eindringen eines Hindernisses in den Spalt zwischen Heckklappe 50 und Karosserie 52 verändert wird. Diese Veränderung des elektrischen Feldes wird dann detektiert. Um das vom Schaltleistenprofil 64 ausgehende elektrische Feld zu beeinflussen und im Bereich des Spaltes zwischen Heckklappe 50 und Karosserie 52 zu konzentrieren, kann das Trägerteil 66 aus elektrisch leitfähigem Kunststoff bestehen. Das Trägerteil 66 wird dann elektrisch mit der Blechstruktur 58 der Heckklappe kontaktiert, um das vom Schaltleistenprofil 64 ausgehende elektrische Feld zur Heckklappe 50 hin abzuschirmen. In gleicher Weise kann zusätzlich der Halteabschnitt des Schaltleistenprofils 64, der ja mit dem Trägerteil 66 in Verbindung steht, aus elektrisch leitfähigem Material ausgebildet sein.

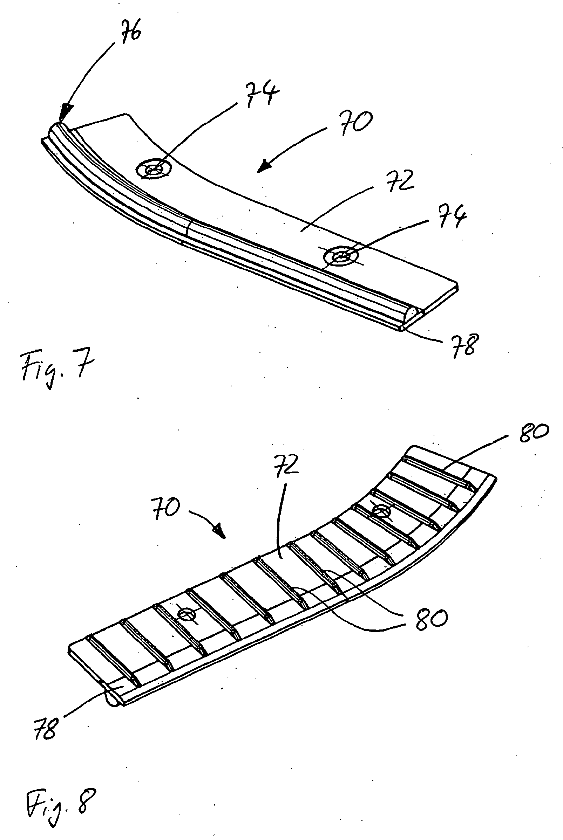

Die Darstellung der Fig. 7 zeigt eine erfindungsgemäße Profilanordnung 70 gemäß einer sechsten Ausführungsform der Erfindung. Ein Trägerteil 72 ist mit zwei Durchgangsöffnungen 74 versehen, durch die beispielsweise Kunststoffspreiznieten eingeführt werden können, um das Halteteil 72 mit einer Fahrzeugtüre zu verbinden. Ein Schaltleistenprofil 76 ist mit dem Halteteil 72 verbunden, wobei das Halteteil 72 an einen Halteabschnitt 78 des Schaltleistenprofils 76 angespritzt ist. Die dadurch entstehende stoffschlüssige Verbindung zwischen dem Halteabschnitt 78 und dem Trägerteil 72 entsteht dabei, wie Fig. 7 zu entnehmen ist, zwischen der in Fig. 7 rechten Längsseite des Halteabschnitts 78 und dem Trägerteil 72.

Wie weiter Fig. 8 zu entnehmen ist, die die Profilanordnung 70 der Fig. 7 von unten zeigt, ist der Halteabschnitt 78 in dem Bereich, der von seiner Längskante ausgeht, die in Kontakt mit dem Trägerteil 72 steht, darüber hinaus ein Stück weit unterspritzt, so dass auch eine flächige, stoffschlüssige Verbindung zwischen einem Randbereich der Unterseite des Halteabschnitts 78 und dem Trägerteil 72 besteht.

Darüber hinaus ist das Trägerteil 72 an seiner Unterseite mit mehreren, im Wesentlichen parallel zueinander verlaufenden und voneinander beabstandeten Rippen 80 versehen, die vom Basisteil des Trägerteils 72 abragen und mit ihrem freien, auskragenden Abschnitt auf einer Unterseite des Halteabschnitts 78 aufliegen. Zwischen einer Unterseite des Halteabschnitts 78, die der Schaltleiste des Schaltleistenprofils 76 abgewandt ist, und den Rippen 80 entsteht beim Spritzen des Trägerteils 72 dadurch eine stoffschlüssige Verbindung im Bereich einer Schmalseite der Rippen 80. Die Rippen 80 halten das Schaltleistenprofil 76 dadurch unterstützend nach Art von auskragenden Trägern. Dadurch kann eine Kontaktfläche zwischen dem Trägerteil 72 und dem Halteabschnitt 78 des Schaltleistenprofils 76 jedenfalls in einem druckempfindlichen Bereich deutlich reduziert werden, so dass während des Spritzens des Trägerteils 72 keine bleibenden Verformungen des Halteabschnitts 78 und somit des gesamten Schaltleistenprofils 76 zu befürchten sind. Speziell ist eine Kontaktfläche zwischen Trägerteil 72 und Halteabschnitt 78 in dem Bereich reduziert, in dem die Druckkräfte beim Spritzen des Trägerteils 72 die Schaltleiste des Schaltleistenprofils 76 zusammendrücken könnten. In dem Bereich, der der Schaltleiste genau gegenüberliegt, sind nämlich lediglich die auskragenden Enden der Rippen 80 auf dem Halteabschnitt 78 angeordnet. Druckkräfte auf den Halteabschnitt 78 in Richtung auf die Schaltleiste sind dadurch wesentlich geringer, als wenn die in Fig. 8 oben liegende Unterseite des Halteabschnitts 78 vollflächig mit Kunststoff des Trägerteils 72 unterspritzt würde.

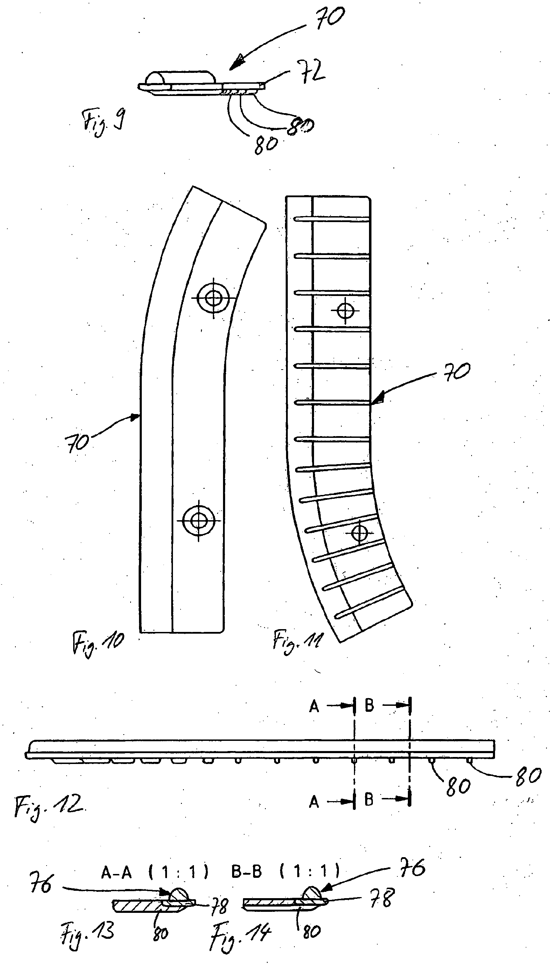

Die Darstellung der Fig. 9 zeigt die Profilanordnung 70 der Fig. 7 von vorne. Gut zu erkennen sind die Rippen 80 am Trägerteil 72.

Die Darstellung der Fig. 10 zeigt die Profilanordnung 70 der Fig. 9 von oben und die Darstellung der Fig. 11 zeigt die Profilanordnung 70 der Fig. 9 von unten. In Fig. 12 ist die Profilanordnung 70 der Fig. 9 von der Seite dargestellt. Zu erkennen ist, dass die Rippen 80 alle die gleiche Höhe aufweisen.

Fig. 13 zeigt eine Ansicht der Schnittebene A-A der Fig. 12 und Fig. 14 zeigt eine Ansicht der Schnittebene B-B in Fig. 12. Anhand von Fig. 13 und Fig. 14 ist die Ausbildung der Rippen 80 gut zu erkennen, die den Halteabschnitt 78 des Schaltleistenprofils 76 balkonartig tragen. Es ist dabei zu erkennen, dass sich die Rippen 80 nicht über die gesamte Breite des Halteabschnitts 78 erstrecken, sondern sich lediglich bis zu einem Bereich erstrecken, der der Seitenkante der Schaltleiste auf der gegenüberliegenden Seite des Halteabschnitts 76 gegenüberliegt. Auf die Schaltleiste des Schaltleistenprofils 76 wirkende Kräfte können dadurch auf kurzem Weg in die Rippen 80 eingeleitet und auf das Trägerteil 72 verteilt werden.

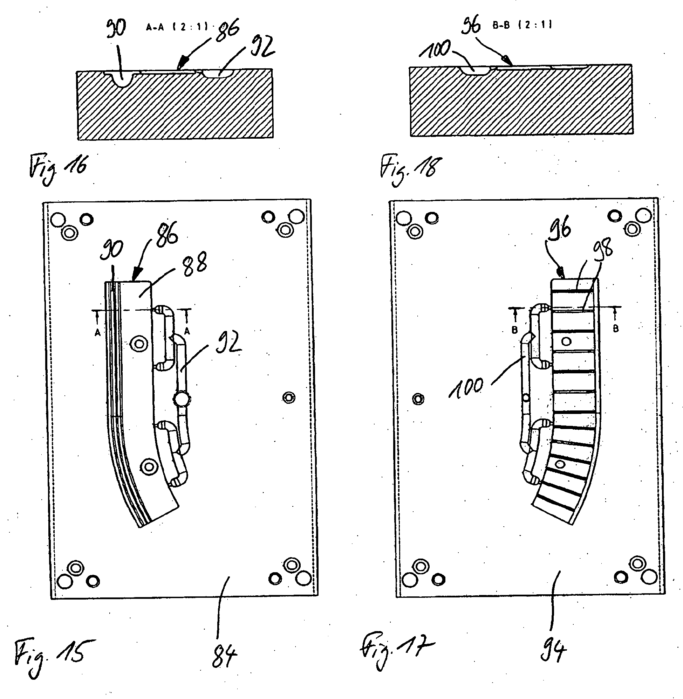

Die Darstellung der Fig. 15 zeigt ein Oberteil 84 eines Spritzgusswerkzeugs zum Herstellen der erfindungsgemäßen Profilanordnung. Eine Kavität 86 des Oberteils 84 weist einen Abschnitt 88 zum Formendes Trägerteils und eine Nut 90 zum Einlegen des Schaltleistenprofils auf. Kanäle 92 sind zum Zuführen des fließfähigen Kunststoffs beim Spritzen vorgesehen.

Die Darstellung der Fig. 16 zeigt eine Ansicht auf die Schnittebene A-A der Fig. 15. Gut zu erkennen ist die Nut 90 zum Einlegen des Schaltleistenprofils sowie die Kanäle 92.

Die Darstellung der Fig. 17 zeigt ein Unterteil 94 einer Spritzgussform zum Herstellen der erfindungsgemäßen Profilanordnung 70. Eine Kavität 96 weist Vertiefungen 98 zum Ausbilden der Rippen 80 und ebenfalls Kanäle 100 zum Zuführen des Kunststoffmaterials auf.

Die Ansicht der Fig. 18 auf die Schnittebene B-B der Fig. 17 verdeutlicht die Gestaltung der Kavität 96, auch wenn die Ausnehmungen 98 zur Ausbildung der Rippen 80 in Fig. 18 nicht zu erkennen sind.

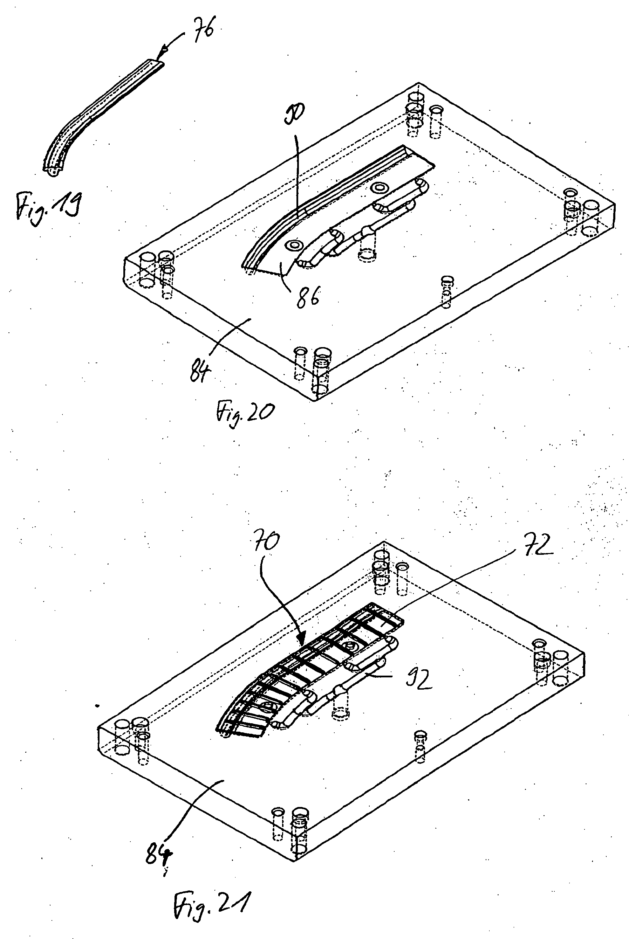

In Fig. 19 ist das Schaltleistenprofil 76 nach dem Extrusionsvorgang dargestellt und bevor es in die Spritzgussform eingelegt wird.

Fig. 20 zeigt dann das Oberteil 84 der Spritzgussform, wobei in die Nut 90 das in Fig. 19 dargestellte Schaltleistenprofil 76 eingelegt wird.

Fig. 21 zeigt das Oberteil 84 nach dem Einspritzen des Kunststoffs für das Trägerteil 72 und nach dem Abnehmen des Unterteils 94 der Spritzgussform, das in Fig. 17 dargestellt ist. Die vollständige erfindungsgemäße Profilanordnung 70 ist nun im Oberteil 84 angeordnet und kann komplett aus diesem entnommen werden. Lediglich das Kunststoffmaterial aus den Spritzkanälen 92 muss noch vom Trägerteil 72 entfernt werden. Im Übrigen stellt das Trägerteil 72 nach dem Entnehmen aus der Spritzgussform aber ein im Wesentlichen einbaufertiges Bauteil dar, lediglich die Drahtlitzen in den Leitern der Schaltleiste müssen noch elektrisch kontaktiert werden.

Alternativ zum nachträglichen Kontaktieren der Drahtlitzen in den Leitern der Schaltleiste nach dem Anspritzen des Trägerteils 72 können die Drahtlitzen bereits vor dem Einlegen des Schaltleistenprofils in die Nut 90 kontaktiert werden. Zusammen mit dem Einspritzen des Kunststoffs für das Trägerteil 72 kann dann auch eine Abdichtung der beiden Enden des Schaltleistenprofils erfolgen, die sonst nach dem Kontaktieren vorgenommen werden müsste. Überraschenderweise hat sich gezeigt, dass eine solche automatische Abdichtung der Enden des Schaltleistenprofils zusammen mit dem Einspritzen des Kunststoffs für das Trägerteil 72 möglich ist. Dadurch kann ein weiterer Arbeitsschritt eingespart werden.

## Patentansprüche

1. Profilanordnung mit einem als Kunststoffspritzteil ausgeführten Trägerteil (12; 66; 72) und einem zumindest abschnittsweise elastisch nachgiebigen Schaltleistenprofil (14; 64; 76), wobei das Schaltleistenprofil (14; 36; 40; 44; 64; 76) einen gemeinsam mit dem Schaltleistenprofil (14; 36; 40; 44; 64; 76) extrudierten Halteabschnitt (16; 38; 42; 46; 78) aufweist, der mit dem Trägerteil (12; 66; 72) verbunden ist, **dadurch gekennzeichnet, dass** der Halteabschnitt (16; 38; 42; 46; 78) des Schaltleistenprofils (14; 36; 40; 44; 64; 76) durch Anspritzen eines Trägerteilabschnitts wenigstens abschnittsweise stoffschlüssig mit dem Trägerteil (12; 66; 72) verbunden ist und dass der Halteabschnitt (16; 38; 42; 46; 78) beidseitig seitlich über ein schlauchartiges Schaltprofil (18) des Schaltleistenprofils (14; 36; 40; 44; 64; 76) hinausragt.

2. Profilanordnung nach Anspruch 1, **dadurch gekennzeichnet, dass** der Halteabschnitt (16; 38; 42; 46; 78) die Form einer Leiste mit annähernd rechteckförmigen Querschnitt aufweist und dass auf dem Halteabschnitt das eigentliche Schaltprofil (18) angeordnet ist, das aus elastisch nachgiebigem Kunststoff besteht und eine schlauchartige Form aufweist.

3. Profilanordnung nach Anspruch 1 oder 2, **dadurch gekennzeichnet, dass** der Trägerteilabschnitt wenigstens eine Rippe (80) aufweist und der Halteabschnitt (78) des Schaltleistenprofils (76) stoffschlüssig mit einer Schmalseite der Rippe (80) verbunden ist.

4. Profilanordnung nach Anspruch 3, **dadurch gekennzeichnet, dass** das Trägerteil (72) mehrere Rippen (80) aufweist, die mir ihrem jeweiligen Endabschnitt frei von einem Basisabschnitt des Trägerteils (72) abragen, wobei der Halteabschnitt (78) des Schaltleistenprofils (76) auf den Endabschnitten der Rippen (80) aufliegt und mit diesen stoffschlüssig verbunden ist.

5. Profilanordnung nach wenigstens einem der vorstehenden Ansprüche, **dadurch gekennzeichnet, dass** der Halteabschnitt (38; 42; 46) des Schaltleistenprofils (36; 40; 44) mit Vorsprüngen, Nuten, Rippen und/oder Stufen versehen ist.

6. Profilanordnung nach wenigstens einem der vorstehenden Ansprüche, **dadurch gekennzeichnet, dass** der Halteabschnitt (42) des Schaltleistenprofils (40) mit wenigstens einem Hinterschnitt versehen ist und im Bereich des Hinterschnitts mit dem Trägerteil formschlüssig verbunden ist.

7. Profilanordnung nach wenigstens einem der vorstehenden Ansprüche, **dadurch gekennzeichnet, dass** das Trägerteil (66; 72) als längliche Leiste ausgebildet und mit Befestigungsmitteln (68) zur Befestigung an einer Fahrzeugkarosserie (52) versehen ist.

8. Profilanordnung nach wenigstens einem der vorstehenden Ansprüche, **dadurch gekennzeichnet, dass** das Schaltleistenprofil (76) entlang seiner Längsrichtung und/oder entlang seiner Querrichtung gekrümmt verläuft.

9. Profilanordnung nach wenigstens einem der vorstehenden Ansprüche, **dadurch gekennzeichnet, dass** das Halteteil des Schaltleistenprofils wenigstens abschnittsweise aus elektrisch leitfähigem Material besteht.

10. Profilanordnung nach wenigstens einem der vorstehenden Ansprüche, **dadurch gekennzeichnet, dass** das Trägerteil wenigstens abschnittsweise aus elektrisch leitfähigem Material besteht.

11. Profilanordnung nach wenigstens einem der vorstehenden Ansprüche, **dadurch gekennzeichnet, dass** das Schaltleistenprofil (36) wenigstens zwei parallel zur Längsrichtung des Schaltleistenprofils (36) verlaufende und voneinander beabstandete Leiter (31; 33) aufweist, wobei ein erster Leiter (31) als Kondensatorelektrode zur Erzeugung eines elektrischen Feldes und ein zweiter Leiter (33) als Schildelektrode zur Beeinflussung des elektrischen Feldes ausgebildet ist.

12. Profilanordnung nach Anspruch 11, **dadurch gekennzeichnet, dass** Leiter (31, 37) des Schaltleistenprofils (36) beim Verformen des Schaltleistenprofils in elektrischen Kontakt kommen können.

13. Profilanordnung nach Anspruch 11 oder 12, **dadurch gekennzeichnet, dass** auf einer, dem zweiten Leiter (33) im wesentlichen gegenüberliegenden Seite des ersten Leiters (31) beabstandet vom ersten Leiter (31) wenigstens ein dritter Leiter (35) innerhalb des Schaltleistenprofils (36) vorgesehen ist.

14. Verfahren zum Herstellen einer Profilanordnung mit einem als Kunststoffspritzteil ausgeführten Trägerteil und einem zumindest abschnittsweise elastisch nachgiebigen Schaltleistenprofil, **gekennzeichnet durch** folgende Schritte:
- Einlegen des Schaltleistenprofils- in eine Kunststoffspritzgussform, so dass ein Halteabschnitt des Schaltleistenprofils von einer Kavität der Kunststoffspritzgussform her wenigstens abschnittsweise zugänglich ist, wobei die Kunststoffspritzgussform eine Nut aufweist, in die das Schaltleistenprofil eingelegt werden kann, wobei das Schaltleistenprofil mit dem Halteabschnitt nach oben in die Nut eingeführt wird, bis der Halteabschnitt passgenau in Ausnehmungen liegt, die seitlich an die Nut angrenzen,
- Spritzen des Trägerteils, wobei der zum Spritzen des Trägerteils verwendete Kunststoff im fließfähigen Zustand den Halteabschnitt des Schaltleistenprofils wenigstens abschnittsweise berührt und
- Entnehmen des Trägerteils mit dem angespritzten Schaltleistenprofil.

15. Verfahren nach Anspruch 14, weiter **gekennzeichnet durch** Einlegen des Schaltleistenprofils in eine passende Nut einer Kunststoffspritzgussform und Anlegen eines Unterdrucks an die Nut zum Ansaugen des Schaltleistenprofils.

16. Verfahren nach Anspruch 14 oder 15, weiter **gekennzeichnet durch** Kontaktieren von Drahtlitzen im Schaltleistenprofil vor dem Einlegen des Schaltleistenprofils in die Kunststoffspritzgussform und Abdichten der beiden offenen Enden des Schaltleistenprofils zusammen mit dem Spritzen des Trägerteils.

## Claims

1. Profile arrangement with a support part (12; 66; 72) in the form of a plastic injection moulded part and an at least sectorwise elastically flexible switch rail profile (14; 64; 76), wherein the switch rail profile (14; 36; 40; 44; 64; 76) has a holding portion (16; 38; 42; 46; 78) extruded together with the switch rail profile (14; 36; 40; 44; 64; 76), which holding portion is joined to the support part (12; 66; 72), **characterized in that** the holding portion (16; 38; 42; 46; 78) of the switch rail profile (14; 36; 40; 44; 64; 76) is at least sectorwise integrally joined to the support part (12; 66; 72) by injection moulding of a support part portion thereon, and **in that** the holding portion (16; 38; 42; 46; 78) projects laterally beyond a tubular switching profile (18) of the switch rail profile (14; 36; 40; 44; 64; 76) on both sides.

2. Profile arrangement according to claim 1, **characterized in that** the holding portion (16; 38; 42; 46; 78) is in the form of a strip having an approximately rectangular cross section and **in that** on the holding portion the actual switching profile (18) is disposed, which profile is made of elastically flexible plastic and has a tubular shape.

3. Profile arrangement according to claim 1 or 2, **characterized in that** the support part portion has at least one rib (80) and the holding portion (78) of the switch rail profile (76) is integrally joined to a narrow side of the rib (80).

4. Profile arrangement according to claim 3, **characterized in that** the support part (72) has a plurality of ribs (80), which project with their respective end portion freely from a base portion of the support part (72), wherein the holding portion (78) of the switch rail profile (76) rests on the end portions of the ribs (80) and is integrally joined thereto.

5. Profile arrangement according to at least one of the preceding claims, **characterized in that** the holding portion (38; 42; 46) of the switch rail profile (36; 40; 44) is provided with projections, grooves, ribs and/or steps.

6. Profile arrangement according to at least one of the preceding claims, **characterized in that** the holding portion (42) of the switch rail profile (40) is provided with at least one undercut and is joined to the support part in the vicinity of the undercut by positive fit.

7. Profile arrangement according to at least one of the preceding claims, **characterized in that** the support part (66; 72) is constructed as an elongated strip and is provided with fixing means (68) for fixing to a vehicle body (52).

8. Profile arrangement according to at least one of the preceding claims, **characterized in that** the switch rail profile (76) is curved along its longitudinal direction and/or along its transverse direction.

9. Profile arrangement according to at least one of the preceding claims, **characterized in that** the holding part of the switch rail profile is at least sectorwise made from electrically conductive material.

10. Profile arrangement according to at least one of the preceding claims, **characterized in that** the support part is at least sectorwise made from electrically conductive material.

11. Profile arrangement according to at least one of the preceding claims, **characterized in that** the switch rail profile (36) has at least two mutually spaced conductors (31; 33) running parallel to the longitudinal direction of the switch rail profile (36), wherein a first conductor (31) is constructed as a capacitor electrode for generating an electrical field and a second conductor (33) as a shield electrode for influencing the electrical field.

12. Profile arrangement according to claim 11, **characterized in that** conductors (31, 37) of the switch rail profile (36) can come into electrical contact on deforming the switch rail profile.

13. Profile arrangement according to claim 11 or 12, **characterized in that** at least one third conductor (35) is provided within the switch rail profile (36) on a side of the first conductor (31) which is essentially opposite the second conductor (33) and spaced from the first conductor (31).

14. Method for the manufacture of a profile arrangement with a support part in the form of a plastic injection moulded part and an at least sectorwise elastically flexible switch rail profile, **characterized by** the following steps:
- inserting the switch rail profile into a mould for plastics injection moulding, so that a holding portion of the switch rail profile is at least sectorwise accessible from a cavity of the plastics injection mould, wherein the plastics injection mould has a groove into which the switch rail profile can be inserted, wherein the switch rail profile is introduced into the groove with upwards oriented holding portion up to the holding portion sitting accurately in recesses that are laterally adjoining the groove,
- injection moulding the support part, wherein the plastic material used for injection moulding the support part in the flowable state contacts the holding portion of the switch rail profile at least sectorwise, and
- removing the support part with the injection moulded switch rail profile thereon.

15. Method according to claim 14, further **characterized by** inserting the switch rail profile into a matching groove of a plastics injection mould and applying a negative pressure to the groove for sucking on the switch rail profile.

16. Method according to claim 14 or 15, further **characterized by** contacting of wire strands in the switch rail profile prior to inserting the switch rail profile into the plastics injection mould and sealing both the open ends of the switch rail profile together with injection moulding of the support part.

## Revendications

1. Agencement profilé comprenant une partie de support (12 ; 66 ; 72) réalisée en tant que partie moulée par injection de plastique et un profilé de barrette de commutation (14; 64; 76) au moins en partie élastiquement flexible, le profilé de barrette de commutation (14 ; 36 ; 40 ; 44 ; 64 ; 76) présentant une portion de retenue (16 ; 38 ; 42 ; 46 ; 78) extrudée conjointement avec le profilé de barrette de commutation (14 ; 36 ; 40 ; 44 ; 64 ; 76), laquelle est connectée à la partie de support (12; 66; 72), **caractérisé en ce que** la portion de retenue (16 ; 38 ; 42 ; 46 ; 78) du profilé de barrette de commutation (14 ; 36 ; 40 ; 44 ; 64 ; 76) est connectée par surmoulage d'une portion de partie de support au moins en partie par engagement par liaison de matière avec la partie de support (12; 66; 72) et **en ce que** la portion de retenue (16; 38; 42; 46; 78) fait saillie latéralement de chaque côté au-delà d'un profil de commutation de forme tubulaire (18) du profilé de barrette de commutation (14 ; 36 ; 40 ; 44 ; 64 ; 76).

2. Agencement profilé selon la revendication 1, **caractérisé en ce que** la portion de retenue (16; 38; 42; 46; 78) présente la forme d'une barrette de section transversale approximativement rectangulaire et **en ce que** le profilé de commutation proprement dit (18) est disposé sur la portion de retenue, lequel profilé de commutation se compose de plastique élastiquement flexible et présente une forme de type tubulaire.

3. Agencement profilé selon la revendication 1 ou 2, **caractérisé en ce que** la portion de partie de support présente au moins une nervure (80) et la portion de retenue (78) du profilé de barrette de commutation (76) est connectée par engagement par liaison de matière à un côté étroit de la nervure (80).

4. Agencement profilé selon la revendication 3, **caractérisé en ce que** la partie de support (72) présente plusieurs nervures (80) qui font saillie librement avec leur portion d'extrémité respective depuis une portion de base de la partie de support (72), la portion de retenue (78) du profilé de barrette de commutation (76) reposant sur les portions d'extrémité des nervures (80) et étant connectée à celles-ci par engagement par liaison de matière.

5. Agencement profilé selon au moins l'une quelconque des revendications précédentes, **caractérisé en ce que** la portion de retenue (38; 42; 46) du profilé de barrette de commutation (36; 40; 44) est pourvue de saillies, de rainures, de nervures et/ou de gradins.

6. Agencement profilé selon au moins l'une quelconque des revendications précédentes, **caractérisé en ce que** la portion de retenue (42) du profilé de barrette de commutation (40) est pourvue d'au moins une contre-dépouille et, dans la région de la contre-dépouille, est connectée par engagement par liaison de matière à la partie de support.

7. Agencement profilé selon au moins l'une quelconque des revendications précédentes, **caractérisé en ce que** la partie de support (66; 72) est réalisée sous forme de barrette allongée et est pourvue de moyens de fixation (68) pour la fixation à une carrosserie de véhicule (52).

8. Agencement profilé selon au moins l'une quelconque des revendications précédentes, **caractérisé en ce que** le profilé de barrette de commutation (76) s'étend sous forme courbe le long de sa direction longitudinale et/ou le long de sa direction transversale.

9. Agencement profilé selon au moins l'une quelconque des revendications précédentes, **caractérisé en ce que** la partie de retenue du profilé de barrette de commutation se compose au moins en partie de matériau électriquement conducteur.

10. Agencement profilé selon au moins l'une quelconque des revendications précédentes, **caractérisé en ce que** la partie de support se compose au moins en partie de matériau électriquement conducteur.

11. Agencement profilé selon au moins l'une quelconque des revendications précédentes, **caractérisé en ce que** le profilé de barrette de commutation (36) présente au moins deux conducteurs espacés l'un de l'autre (31; 33) et s'étendant parallèlement à la direction longitudinale du profilé de barrette de commutation (36), un premier conducteur (31) étant réalisé sous forme d'électrode de condensateur pour générer un champ électrique et un deuxième conducteur (33) étant réalisé sous forme d'électrode de blindage pour influencer le champ électrique.

12. Agencement profilé selon la revendication 11, **caractérisé en ce que** des conducteurs (31, 37) du profilé de barrette de commutation (36) peuvent venir en contact électrique lors de la déformation du profilé de barrette de commutation.

13. Agencement profilé selon la revendication 11 ou 12, **caractérisé en ce que** sur un côté du premier conducteur (31) sensiblement opposé au deuxième conducteur (33), à distance du premier conducteur (31), est prévu au moins un troisième conducteur (35) à l'intérieur du profilé de barrette de commutation (36).

14. Procédé de fabrication d'un agencement profilé comprenant une partie de support réalisée sous forme de pièce moulée par injection de plastique et un profilé de barrette de commutation au moins en partie élastiquement flexible, **caractérisé par** les étapes suivantes :
- insertion du profilé de barrette de commutation dans un moule de moulage par injection de plastique, de telle sorte qu'une portion de retenue du profilé de barrette de commutation soit accessible au moins en partie à partir d'une cavité du moule de moulage par injection de plastique, le moule de moulage par injection de plastique présentant une rainure dans laquelle peut être introduit le profilé de barrette de commutation, le profilé de barrette de commutation étant introduit dans la rainure avec la portion de retenue vers le haut, jusqu'à ce que la portion de retenue s'applique avec ajustement serré dans des évidements qui sont adjacents latéralement à la rainure,
- moulage par injection de la partie de support, le plastique utilisé pour le moulage par injection de la partie de support venant au moins en partie en contact à l'état coulant avec la portion de retenue du profilé de barrette de commutation et
- enlèvement de la partie de support avec le profilé de barrette de commutation surmoulé.

15. Procédé selon la revendication 14, **caractérisé en outre par** l'introduction du profilé de barrette de commutation dans une rainure d'ajustement d'un moule de moulage par injection de plastique et application d'une dépression à la rainure pour l'aspiration du profilé de barrette de commutation.

16. Procédé selon la revendication 14 ou 15, **caractérisé en outre par** la mise en contact de brins de câble métalliques dans le profilé de barrette de commutation avant l'introduction du profilé de barrette de commutation dans le moule de moulage par injection de plastique et l'étanchéification des deux extrémités ouvertes du profilé de barrette de commutation conjointement avec le moulage par injection de la partie de support.
